# EUROPEAN PATENT APPLICATION

(11) **EP 4 806 724 A1**
(43) Date of publication of application: **16.09.2026**
(21) Application number: 26159155.6
(22) Date of filing: 17.02.2026
(51) Int. Cl.: B60R 3/00, B60R 3/02

(54) **A STEP OF A VEHICLE**

(30) Priority: 12.03.2025 IT 202500005092
(71) Applicant: LCI Italy S.r.l., 50026 San Casciano in Val di Pesa (FI) (IT)
(72) Inventor: Maragliulo, Marco, Empoli (Florence) (IT); Mirone, Bruno, Poggibonsi (Siena) (IT); Romagnoli, Fabio, Greve in Chianti (Florence) (IT)
(74) Representative: Firmati, Leonardo

(57) **Abstract**

Step (1) of a vehicle (V), comprising a fixed portion (2) adapted to be permanently connected to said vehicle (V), and at least one footboard (3) for supporting a user; first connection means (4) for connecting said at least one support footboard (3) to said fixed portion (2) and second connection means (5) for connecting said fixed portion (2) to said vehicle (V) .

## Description

The present invention relates to a step for a vehicle. Specifically, the present invention relates to a step of the type that can be installed at the access door of a vehicle, such as a recreational vehicle, which allows a user to get on or off the vehicle.

Currently, various types of steps for a vehicle exist. The prior art steps include a footboard, generally designed to automatically move from an extended position, in which the footboard allows a user to ascend or descend, to a retracted position, in which the step is contained within the vehicle's envelope and, in particular, does not protrude from it.

The prior art steps also generally comprise a fixed portion, stabilized on a portion of a vehicle and connected to the footboard.

According to the prior art, the fixed portion, and therefore the step in general, is connected to a portion of the vehicle using screws and bolts.

Prior art steps provide a good solution, but they are certainly not free from drawbacks.

A first drawback of prior art steps is that they are not always easy and practical to use..

In particular, their installation sometimes prove to be slow and complicated.

Another drawback of prior art steps is that their installation on vehicles can sometimes involve a high risk of damage to the vehicle itself.

Indeed, installation of the known steps entails the need to perform drilling operations on the vehicle, with the consequent risk of affecting damageable components, such as the battery.This risk is excessively high when the step is installed aftermarket.

Some prior art steps are secured inside the vehicle cabin.

Specifically, these prior art steps feature a fixed portion designed to rest on an internal surface of the passenger cabin (near a vehicle entrance/exit).

These prior art steps are stable because they transfer their weight directly to the internal surface, by gravity, and do not require any special fastening measures.

However, while constituting a valid installation option, they involve a significant drawback in terms of overall bulk.

In fact, such known steps, when in the retracted configuration, are entirely housed within the vehicle cabin, thereby occupying a significant amount of usable space therein.

It is therefore an aim of the present invention to provide a vehicle step that is capable of solving the aforementioned drawbacks of the prior art.

Another aim of the present invention is to provide a step of a vehicle that guarantees a simple and practical solution.

Another aim of the present invention is to provide a step for a vehicle that allows for quick installation without the risk of damaging the vehicle.

Another aim of the present invention is to provide a vehicle step capable of offering stable and secure footing.

Another aim of the present invention is to provide a vehicle step that does not interfere with the interior space of the vehicle, ensuring that the entire footprint of the step, whether in the extended or retracted configuration, remains confined outside the passenger compartment and beneath the vehicle frame. Another aim of the present invention is to provide a step for a vehicle that ensures quick and easy installation and quick and easy removal if necessary. According to the present invention, these and other aims are achieved by a vehicle step comprising the technical characteristics described in the appended claims.

The technical characteristics of the invention, in accordance with the aforementioned aim, are clearly described in the appended claims, and its advantages are evident from the detailed description that follows, with reference to the attached drawings that illustrate an exemplary and non-limiting embodiment thereof, in which:
- Figure 1 illustrates a schematic side view of a step of a vehicle according to the present invention,
- Figure 2 illustrates a schematic perspective view from above of the step shown in Figure 1,
- Figure 3 illustrates a schematic view of a detail of the step shown in Figure 1, and
- Figure 4 illustrates a schematic exploded view of a detail of the step shown in Figure 1.

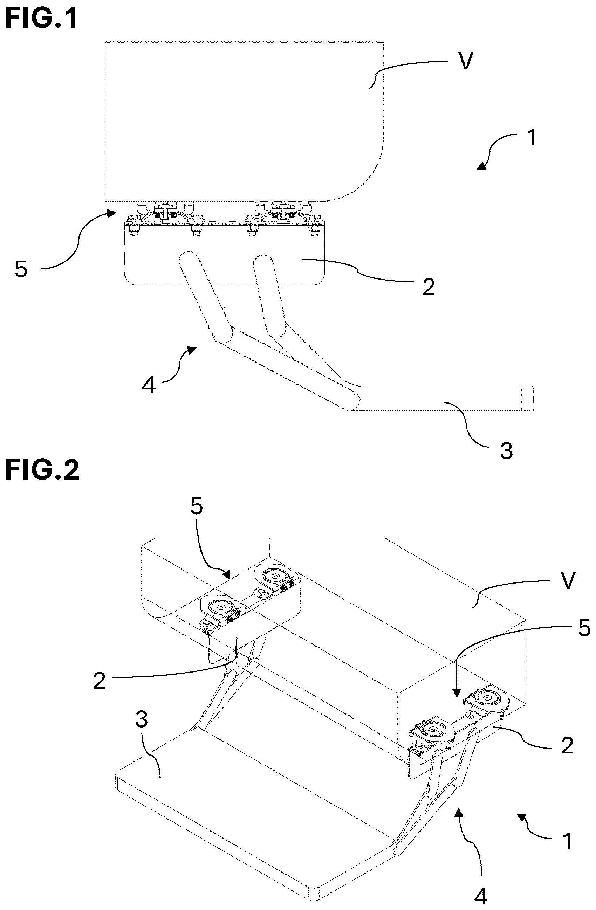

With reference to the appended figures 1 and 2, the reference numeral 1 indicates a step of a vehicle V that is the aim of the present invention, hereinafter also referred to simply as "step 1".

A vehicle is any means of transporting people, such as caravans, campers, vans, minivans, or the like.

The step 1 of this invention includes a fixed portion 2 designed to be permanently connected to the vehicle V. Specifically, the fixed portion 2 of the step is designed to be permanently connected to a lower external surface of the vehicle V, i.e., in an area commonly referred to as the "underbody," located near an entry/exit door.

This allows the step 1 to be kept outside the vehicle's passenger cabin, both when the step 1 is retracted and extended.

Specifically, the fixed portion 2 of the step 1 is designed to be permanently connected to the vehicle V near a user entry/exit door.

According to the embodiment illustrated in the attached figures 1 and 2, the step 1 includes a footboard 3 to support a user.

This support footboard 3 supports the user's weight when entering or exiting vehicle V.

According to an embodiment not illustrated, the step 1 includes two or more footboards 3 designed to essentially define a ladder for entering/exiting vehicle V.

The support footboard 3 is movable between a retracted and an extended configuration.

This allows footboard 3 to be retracted close to vehicle V while in motion, and to be extended outward when the vehicle is stationary and a user needs to enter or exit.

As mentioned, even when the step 1 is in the retracted configuration, the footboard 3 is stored outside the passenger compartment of the vehicle V and near the lower external surface.

This configuration ensures that the vehicle's interior space is never encroached upon by the footprint of footboard 3 (or by step 1 in general), even when retracted.

The step 1 of the present invention comprises first connection means 4 for connecting the support footboard 3 to the fixed portion 2.

According to the embodiment where footboard 3 is movable between a retracted and an extended configuration, the first connection means 4 guide and support the footboard 3 during its movement. Furthermore, advantageously, the step 1 includes a motor for driving the first connection means 4.

This allows for the automatic movement of the mobile support footboard 3.

The step 1 includes second connection means 5 for connecting the fixed portion 2 to the vehicle V.

The second connection means 5 include at least one magnet 51.

Advantageously, the magnets 51 are neodymium.

This type of magnet ensures a stable hold even for heavy loads.

Advantageously, the second connection means 5 include a plate 52 that can be fixed to the fixed portion 2.

The at least one magnet 51 can be fixed to the plate 52.

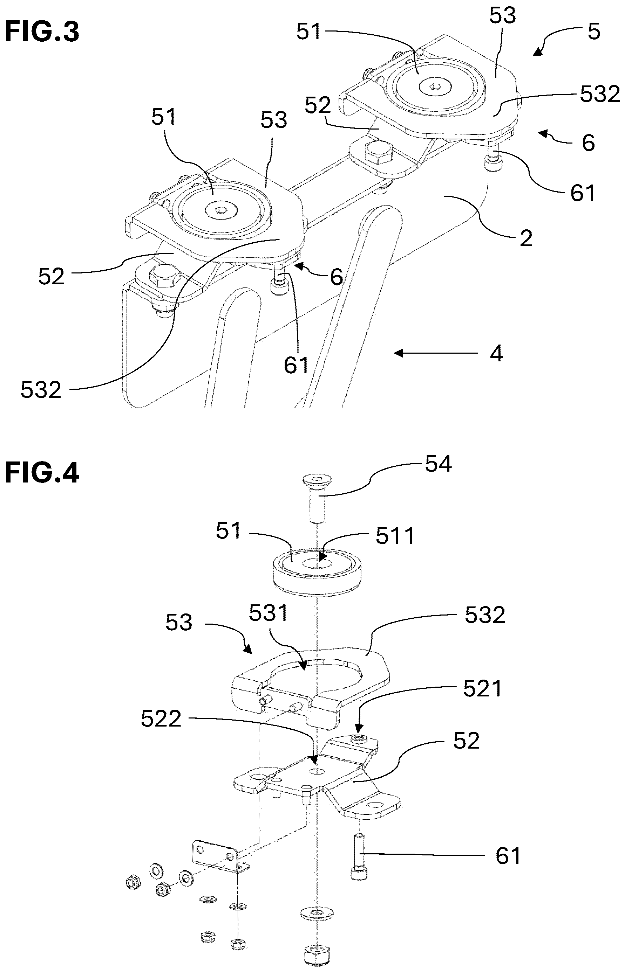

With reference to the attached figure 4, the magnet 51 has a gap 511 and the plate 52 has a screw portion 522. Advantageously, the step 1 includes a screw 54 designed to pass through the gap 511 of magnet 51 and to be screwed into the screw portion 522 to secure magnet 51 to plate 52.According to an embodiment not illustrated, the magnet 51 can be secured to the plate 52 by magnetic attraction.

The connection means 5 comprise a bracket 53 hinged at one end to the plate 52 so that the magnet 51 is positioned between the plate 52 and the bracket 53. Advantageously, the bracket 53 has an opening 531 facing the magnet 51.

Substantially, according to the embodiment illustrated in the attached figures, the magnet 51 has a surface in direct contact with the vehicle V.

This optimizes the stabilization of the step 1 on the vehicle V.

However, it is understood that the magnet 51 may also not have a surface in direct contact with the vehicle V, according to a further embodiment not illustrated.

The magnet 51, the plate 52, and the bracket 53 define a magnetic coupling point for the step to the vehicle V.

The provision of at least one magnetic coupling point allows for at least partially avoiding drilling holes in the vehicle V for screw fastenings to the vehicle V itself.

This allows for safe installation of the step 1. According to the embodiment illustrated in figure 2, the second connection means 5 include four magnetic coupling points.

In other words, they include a magnetic coupling point for each corner of the step.

This makes it possible to completely eliminate the need for drilling operations on the vehicle V, thereby preserving its safety by avoiding the risk of damaging sensitive components, such as the battery.

However, it is understood that, according to some possible embodiments not illustrated, the second connection means 5 may be of a hybrid type, that is, comprising both magnets 51 and threaded coupling points.

Such an embodiment may be adopted in cases where, at specific locations, it is certain that no damageable components will be compromised.

Advantageously, each coupling point guarantees a holding capacity of between 85 and 95 kg. Advantageously, with reference to the attached figures 3 and 4, plate 52 has an internally threaded slot 521. Advantageously, step 1 further comprises a screw 61 configured to engage in screwing/unscrewing with slot 521 and to abut against a portion 532 of bracket 53. This portion 532 is substantially formed on an end opposite to that on which the plate 52 and the bracket 53 are hinged.

The step 1 includes detachment means 6 for detaching the magnet 51.

According to one embodiment, the screw 61 defines the aforementioned detachment means 6 for detaching the magnet 51 from the vehicle V.

Essentially, when the magnet 51 is in stable contact with the vehicle V, the contact surface of the magnet 51 defines a plane with the bracket 53.

When it is necessary to detach the magnet 51 from the vehicle V, the screw 61 engages the slot 521 of the plate 52 and, by screwing, cooperates with the portion 532 of the bracket 53.

By doing so, the bracket 53 is tilted relative to the upper surface of the magnet 51, substantially detaching magnet 51 from the vehicle V.

According to an embodiment not illustrated, the detachment means 6 are defined by a tape configured to wrap around magnet 51.

This tape includes two pullable edges to detach the magnet 51 from the vehicle V.

Advantageously, the step 1 comprises first safety means configured to secure the magnet 51 and prevent it from detaching.

These first safety means are advantageously defined by a tape or safety cable designed to wrap around a magnet coupling point.

Furthermore, the step 1 comprises second safety means configured to secure the step 1 in the event of magnet 51 detaching.

Such second safety means are advantageously defined by a tape or safety cable designed to wrap around the step 1.

The step of a vehicle of the present invention resolves the drawbacks of the prior art and achieves significant advantages.

A first advantage of the step of the present invention lies in the fact that it provides secure support and a stable footing for a user of the vehicle.

A further advantage of the step of the present invention is that it ensures quick and practical installation.

This is ensured by the fact that attachment by magnets, or by magnetic attraction, is quick and simple.

A further advantage of the step of the present invention is that it ensures safe installation and eliminates the risk of damaging vehicle components.

A further advantage of the step of the present invention is that it ensures quick and stable attachment, while keeping the step itself entirely outside the vehicle's passenger compartment.

This ensures optimal use of living space, without neglecting installation stability and ease of installation and removal.

This is ensured by the fact that, thanks to the magnetic attachment points, no drilling of the vehicle is required.

## Claims

1. Step (1) of a vehicle (V), comprising:
- a fixed portion (2), adapted to permanently connect to an external lower surface of said vehicle (V),
- at least one footboard (3) to support a user, said footboard (3) being movable between a retracted configuration and an extended configuration, wherein in said retracted configuration the footboard (3) is housed outside a passenger cabin of said vehicle (V) and in proximity to said external lower surface;
- first connection means (4) for connecting said at least one support footboard (3) to said fixed portion (2);
- second connection means (5) for connecting said fixed portion (2) to said vehicle (V), said step (1) being **characterized by** the fact that said second connection means (5) comprise at least one magnet (51) and by the fact that it comprises means (6) for detaching said at least one magnet (51).

2. Step (1) according to any of the preceding claims, **characterized in that** said second connection means (5) comprise a plate (52) attachable to said fixed portion (2), said at least one magnet (51) being attachable to said plate (52), said second connection means (5) comprising a bracket (53) hinged at one end on said plate (52) such that said magnet (51) is interposed between said plate (52) and said bracket (53), said bracket (53) having an opening (531) facing said magnet (51);
said magnet (51), said plate (52) and said bracket (53) defining a magnetic coupling point of said step (1) with said vehicle (V).

3. Step (1) according to the preceding claim, **characterized in that** said second connection means (5) comprise four of said magnetic coupling points.

4. Step (1) according to claim 2, wherein said plate (52) has an internally threaded slot (521) and **characterized in that** said detachment means (6) have a screw (61) adapted to screw/unscrew engagement with said slot (521), said screw also being adapted to abut a portion (532) of said bracket (53) opposite said end on which said plate (52) and said bracket (53) are hinged.

5. Step (1) according to claim 1, **characterized in that** said detachment means (6) comprise a tape configured to wrap around said magnet (51), said tape having two pullable edges to detach said magnet (51) from said vehicle (V).

6. Step (1) according to any of the preceding claims, wherein said magnet (51) has a gap (511) and said plate (52) has a screw portion (522), and **characterized by** comprising a screw (54) adapted to pass through said gap (511) of said magnet (51) and screw onto said screw portion (522) to secure said magnet (51) to said plate (52).

7. Step (1) according to any of the preceding claims, **characterized by** comprising safety means configured to keep said magnet (51) safe and prevent it from detaching.

8. Step (1) according to any of the preceding claims, **characterized by** comprising a motor for driving said first connection means (4).
